# EUROPÄISCHE PATENTANMELDUNG

(11) **EP 0 649 266 A2**
(43) Veröffentlichungstag der Anmeldung: **19.04.1995**
(21) Anmeldenummer: 94115823.0
(22) Anmeldetag: 07.10.1994
(51) Int. Cl.: H04Q 7/22, H04M 3/56

(54) **Mobilfunknetz und Konferenzdienst-Einrichtung dafür**

(30) Priorität: 14.10.1993 DE 4335031
(71) Anmelder: Alcatel SEL Aktiengesellschaft, D-70435 Stuttgart (DE)
(72) Erfinder: Böhn, Dr. Manfred, D-70499 Stuttgart (DE)
(74) Vertreter: Knecht, Ulrich Karl

(57) **Zusammenfassung**

Es wird ein Mobilfunknetz (PLMN) mit einer Funkvermittlungsstelle (GMSC) vorgeschlagen, an die eine rechnergesteuerte Konferenzdienst-Einrichtung (SERV) so angeschlossen ist, daß sie mindestens drei Teilnehmeranschlüsse (1, 2, 3, N) nachbildet.

Den Teilnehmer-Anschlüssen sind virtuelle Teilnehmer( M1', M2', T1', T2') zugeordnet, zwischen denen die Konferenzdienst-Einrichtung (SERV) Punkt-zu-Mehrpunkt-Verbindungen schaltet. Zur Schaltung einer Teilnehmerkonferenz vermittelt die Funkvermittlungsstelle (GMSC) Punkt-zu-Punkt-Verbindungen zwischen reellen Teilnehmern (M1, M2, T1, T2) und den virtuellen Teilnehmern (M1', M2', T1', T2').

Der Konferenzdienst wird ausschließlich in der Konferenzdienst-Einrichtung (SERV) durchgeführt, vorzugsweise sprachgeführt mittels Spracheingabe- und Sprachausgabevorrichtungen (B).

Der Konferenzdienst-Einrichtung ist eine Mobilfunkteilnehmernummer (TN 007) zugeordnet, unter der ein Teilnehmer des Mobilfunknetzes (M1) oder eines daran angeschlossenen Netzes eine Konferenzschaltung anfordern kann.

## Beschreibung

Die Erfindung betrifft ein Mobilfunknetz und eine Konferenzdienst-Einrichtung dafür.

Aus dem "Mobilfunk-Handbuch" von J. Kedaj und G. Hentschel, 3. Auflage, Neue Mediengesellschaft Ulm mbH, 1993 ist ein Mobilfunknetz mit einer Funkvermittlungsstelle bekannt, die Punkt-zu-Punkt-Verbindungen vermittelt. Dort sind im Kap. 4 das Mobilfunknetz GSM (Global System for Mobile Communications) und insbesondere im Abschnitt 4.1.4.4 die Funkvermittlungsstelle im GSM-Netz beschrieben.

In diesem bekannten Mobilfunknetz schaltet die Funkvermittlungsstelle "Verbindungswege zum mobilen Teilnehmer über BSC (Base Station Controller, Funkfeststationssteuerung) und BS (Base Station, Funkfeststation) bzw. zum festen Teilnehmer über das PSTN (Public Switched Telephone Network, öffentliches Fernsprechnetz)". Demnach ist die Funkvermittlungsstelle zur Vermittlung von Punkt-zu-Punkt-Verbindungen ausgelegt. Eine Konferenzschaltung, d.h. eine Mehrpunkt-Verbindung zwischen mindestens drei Teilnehmern, ist nicht möglich.

In den Empfehlungen des Europäischen Instituts für Fernmeldenormen (ETSI) "GSM 02.84, Vers. 4.4.1" vom Okt. 1992 und "GSM 02.30, Vers. 4.9.0", Seiten 11-13, von April 1993 wird ein als "Multi-Party Service" bezeichneter Konferenzdienst für das GSM-Mobilfunknetz beschrieben. Dort werden solche Leistungsmerkmale des Konferenzdienstes beschrieben, die für die Erstellung der Anwenderprogramme (Software zur Durchführung des Konferenzdienstes) wesentlich sind. Mit welchen physikalischen Mitteln (Hardware) der Konferenzdienst in dem Mobilfunknetz eingerichtet werden kann, wird nicht beschrieben.

Weiterhin ist aus DE 31 16 656 C2 ein Mobilfunknetz für Fahrzeugflottenruf bekannt, bei dem ein Mobil-Vermittlungsamt eine Konferenzschaltung enthält und somit auch für eine Vermittlung von Punkt-zu-Mehrpunkt-Verbindungen geeignet ist.

Aufgabe der Erfindung ist, ein Mobilfunknetz mit einfachen Mitteln zur Durchführung eines Konferenzdienstes bereitzustellen, insbesondere auch dann, wenn das Mobilfunknetz Funkvermittlungsstellen enthält, die ausschließlich Punkt-zu-Punkt-Verbindungen vermitteln.

Gelöst wird die Aufgabe durch ein Mobilfunknetz nach Anspruch 1 und eine Konferenzdienst-Einrichtung nach Anspruch 4.

Demnach wird eine rechnergesteuerte Konferenzdienst-Einrichtung zum Anschluß an eine Funkvermittlungsstelle bereitgestellt, die mindestens drei Teilnehmeranschlüsse nachbildet, zwischen denen sie Punkt-zu-Mehrpunkt-Verbindungen schaltet. Die Funkvermittlungsstelle benötigt keine Mittel zur Einrichtung und Durchführung eines Konferenzdienstes. Die Erfindung ermöglicht eine einfache Einrichtung eines Konferenzdienstes auch in vorhandenen Mobilfunknetzen, die nur für die Vermittlung von Punkt-zu-Punkt-Verbindungen geeignet sind.

Vorteilhafte Ausführungen der Erfindung sind den Unteransprüchen zu entnehmen.

Im weiteren wird die Erfindung anhand eines Ausführungsbeispiels und unter Zuhilfenahme der Zeichnungen beschrieben, von denen
- Fig. 1: eine Konferenzschaltung zwischen Mobilfunk-Teilnehmern und Teilnehmern eines öffentlichen Fernsprechnetzes und
- Fig. 2: eine rechnergesteuerte Konferenzdienst-Einrichtung für das Mobilfunknetz
schematisch darstellen.

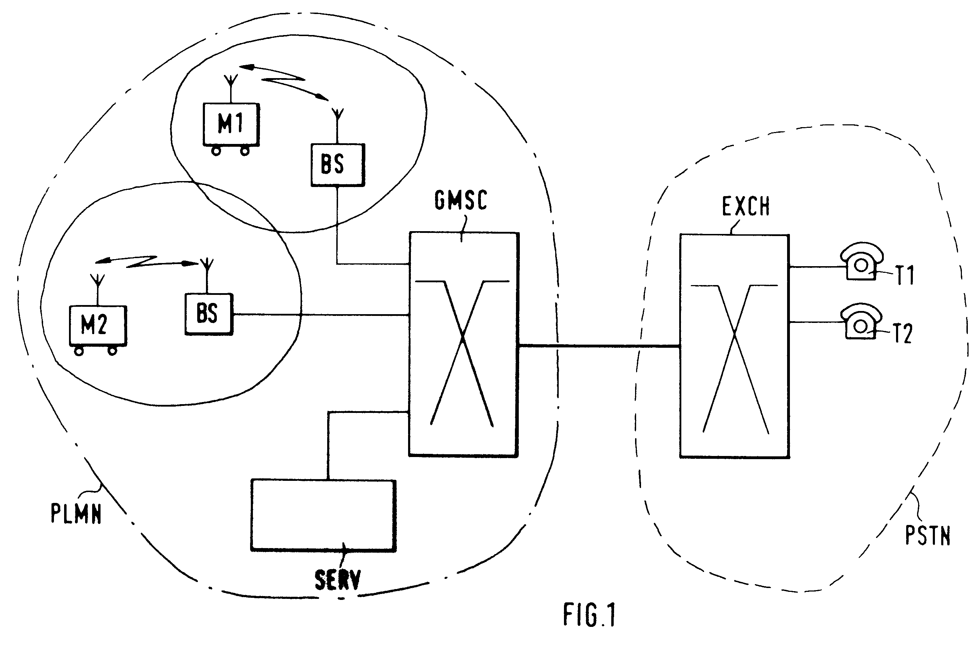

In Fig. 1 ist schematisch ein Mobilfunknetz PLMN und ein damit verbundenes öffentliches Fernsprechnetz PSTN dargestellt. Das hier gezeigte Mobilfunknetz ist nach dem GSM-Standard ausgelegt. Das Mobilfunknetz enthält eine Funkvermittlungsstelle GMSC und daran angeschlossene Funkfeststationen BS. Weiterhin enthält das Mobilfunknetz eine rechnergesteuerte Konferenzdienst-Einrichtung SERV, die an die Funkvermittlungsstelle angeschlossen ist.

Innerhalb des Mobilfunknetzes PLMN sind Mobilfunkteilnehmer drahtlos mit einer der Funkfeststationen verbindbar und weiterhin über die Verbindungen zwischen der jeweiligen Funkfeststation und der Funkvermittlungsstelle an letztere anschließbar.

Beispielhaft sind hier nur zwei Mobilfunkteilnehmer M1 und M2 sowie zwei Funkfeststationen dargestellt. Um die Zeichnung weiterhin zu vereinfachen, wurde auf eine Darstellung von Funkfeststationssteuerungen, sogenannten Base-Station-Controllern, verzichtet.

Die Mobilfunkteilnehmer M1 und M2 sind über die Funkfeststationen BS und die hier nicht gezeigten Funkfeststationssteuerungen mit der Funkvermittlungsstelle GMSC verbunden.

Die Funkvermittlungsstelle ist in diesem Beispiel als sogenannte Transitvermittlungsstelle (gate way mobile switching center) ausgeführt. Sie stellt die Verbindung des Mobilfunknetzes PLMN mit einem Telekommunikationsnetz, in diesem Beispiel einem öffentlichen Fernsprechnetz PSTN, her, indem sie mit einer Vermittlungsstelle des Telekommunikationsnetzes verbunden ist. In diesem Beispiel enthält das öffentliche Fernsprechnetz PSTN eine Vermittlungsstelle EXCH, an die beispielhaft zwei Teilnehmer T1 und T2 angeschlossen sind. Auf die Darstellung von Vermittlungsanlagen, die zwischen diesen Teilnehmern und der Vermittlungsstelle EXCH geschaltet sind, wie etwa Nebenstellenanlagen und Ortsvermittlungsstellen, wird hier verzichtet.

Im weiteren wird nun der Aufbau, die Durchführung und der Abbau einer Konferenzschaltung zwischen den vier Teilnehmern M1 und M2, T1 und T2 beschrieben. Erfindungsgemäß ist dazu die rechnergesteuerte Konferenzdienst-Einrichtung vorgesehen, die an die Funkvermittlungsstelle GMSC angschlossen ist und dort mindestens drei Teilnehmer-Anschlüsse nachbildet, denen jeweils eine virtuelle Teilnehmernummer zugeordnet ist. Die Funkvermittlungsstelle GMSC ist in diesem Beispiel nur für eine Vermittlung von Punkt-zu-Punkt-Verbindungen eingerichtet. Die für eine Konferenzschaltung notwendigen Punkt-zu-Mehrpunkt-Verbindungen werden von der Konferenzdienst-Einrichtung SERV geschaltet.

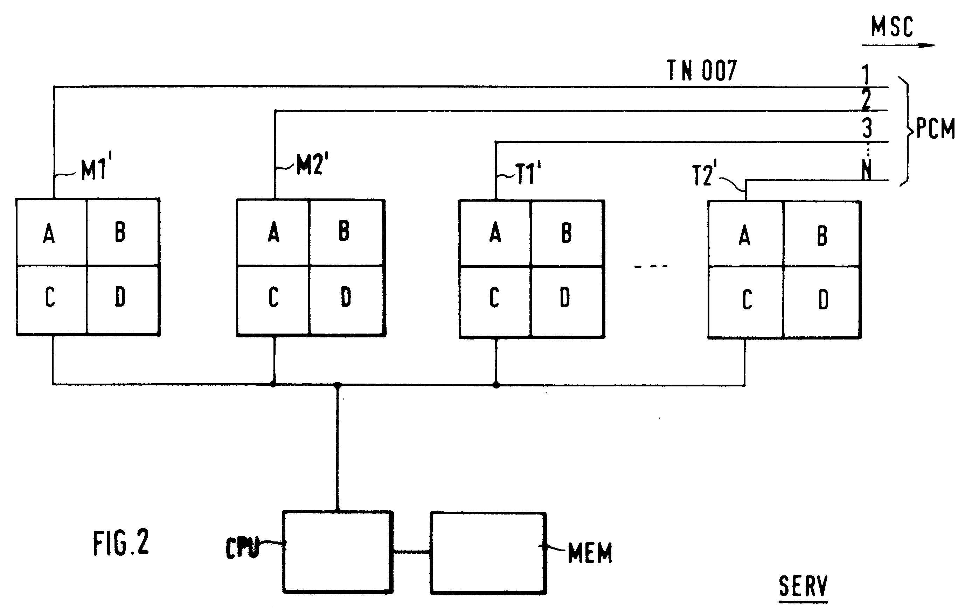

Zur genaueren Beschreibung der Teilnehmer-Konferenz wird im weiteren auch Fig. 2 herangezogen, in der schematisch die rechnergesteuerte Konferenzdienst-Einrichtung SERV dargestellt ist.

Zum Anschluß an die Funkvermittlungsstelle enthält die rechnergesteuerte Konferenzdienst-Einrichtung Schnittstellen-Schaltkreise A, die jeweils einen Teilnehmer-Anschluß 1, 2, 3, N nachbilden. In diesem Beispiel sind vier Schnittstellen-Schaltkreise dargestellt, die jeweils einen Vierdraht-Teilnehmer-Anschluß nachbilden. Die Teilnehmer-Anschlüsse werden durch eine hier nicht gezeigte Adapterschaltung mit einer Mehrkanalübertragungsstrecke verbunden, die an die Funkvermittlungsstelle angeschlossen ist. Jedem Teilnehmer-Anschluß 1, 2, 3 und N, der von einem der Schnittstellen-Schaltkreise nachgebildet wird, ist ein virtueller Teilnehmer M1, M2, T1, T2 zugeordnet, d.h. die Funkvermittlungsstelle kann zwischen den nachgebildeten Teilnehmer-Anschlüssen und reellen Teilnehmer-Anschlüssen nicht unterscheiden.

Neben den Schnittstellen-Schaltkreisen enthält die Konferenzdienst-Einrichtung weiterhin steuerbare Schaltvorrichtungen C, die miteinander über eine Konferenzschiene verbunden sind und die Punkt-zu-Mehrpunkt-Verbindungen zwischen den virtuellen Teilnehmern schalten. Die Konferenzschiene ist als Daten- und Steuerbus ausgeführt. Die Konferenzdienst-Einrichtung enthält weiterhin Rechner- und Steuermittel, wie einen Zentralprozessor CPU, der mit dem Daten- und Steuerbus verbunden ist, und vier Teilnehmer-Führungsschaltungen D, die jeweils mit einer der Schaltvorrichtungen verbunden sind. An den Zentralprozessor CPU ist weiterhin ein Arbeitsspeicher MEM angeschlossen. Der Zentralprozessor steuert die Zentralvorrichtungen C so, daß jeweils einer der virtuellen Teilnehmer (M1') mit den verbleibenden anderen virtuellen Teilnehmern verbunden ist. Die Teilnehmer-Führungsschaltungen D senden über die nachgebildeten Teilnehmer-Anschlüsse 1, 2, 3 und N Steuersignale zum Verbindungsaufbau (z.B. DTMF-Signale), so daß die Funkvermittlungsstelle GMSC Punkt-zu-Punkt-Verbindungen zwischen reellen Teilnehmern in den Netzen M1, M2, T1, T2 und den virtuellen Teilnehmern M1', M2', T1' und T2' herstellen kann. Weiterhin sind die Teilnehmer-Führungsschaltungen D für das Halten und für den Abbau von vermittelten Verbindungen zuständig. In diesem Beispiel enthält die Konferenzdienst-Einrichtung Spracheingabe- und Sprachausgabemittel B, die an die Schnittstellen-Schaltkreise und an die Teilnehmer-Führungsschaltungen angeschlossen sind. Dadurch wird eine sprachgesteuerte Konferenzschaltung ermöglicht.

Zunächst wird eine einfache Konferenzschaltung zwischen den in Fig. 1 dargestellten Teilnehmern beschrieben. Die rechnergesteuerte Konferenzdienst-Einrichtung, die einen Konferenzdienst nach Art einer intelligenten Netzfunktion ausführt, wird im weiteren kurz Dienste-Rechner SERV genannt. Zur Einberufung einer Konferenz wählt einer der Teilnehmer, hier beispielsweise der Mobilfunkteilnehmer M1, eine Teilnehmernummer TN 007, die dem Dienste-Rechner innerhalb des Mobilfunknetzes fest zugeordnet ist. Demnach vermittelt die Funkvermittlungsstelle GMSC eine Punkt-zu-Punkt-Verbindung zwischen dem Mobilfunkteilnehmer M1 und dem virtuellen Teilnehmer M1', dem die feste Teilnehmernummer zugeordnet ist. Nach Vermittlung dieser Verbindung wird der Dienste-Rechner über den entsprechenden nachgebildeten Teilnehmer-Anschluß 1 aktiviert.

Die Rechner- und Steuermittel sowie die Spracheingabe- und Sprachausgabemittel des Dienste-Rechners erzeugen eine akustische Antwort-Meldung wie etwa "Hier automatischer Konferenzdienst. Bitte nennen Sie die Anzahl der Teilnehmer, mit denen Sie sprechen wollen.". Diese Meldung wird dem Mobilfunkteilnehmer M1 über die geschaltete Verbindung mitgeteilt, der daraufhin die gewünschte Anzahl akustisch eingeben kann (hier z.B. "Drei"). Nach Erhalt dieser Meldung registriert der Dienste-Rechner SERV die Anzahl, indem er drei weitere Schnittstellenkreise A für die gewünschte Konferenzschaltung bereithält und die Teilnehmeranzahl in dem Speicher MEM ablegt. Danach generiert der Dienste-Rechner einer weitere akustische Meldung wie z.B. "Sie wünschen drei Teilnehmer zu sprechen. Bitte nennen Sie die Teilnehmernummer des ersten Teilnehmers". Nach Erhalt dieser Meldung nennt der Mobilfunkteilnehmer die gewünschte Teilnehmernummer, welche vom Dienste-Rechner anschließend im Speicher abgelegt wird. In der gleichen Weise werden die restlichen Teilnehmernummern erfaßt und danach mit dem Aufbau der Konferenzschaltung begonnen. Über die weiteren drei aktivierten Teilnehmeranschlüsse 2, 3 und N steuert die jeweilige Teilnehmer-Führungsschaltung D den Verbindungsaufbau (Frequenzwahl oder Impulswahl), so daß die Funkvermittlungsstelle und eventuell weitere Vermittlungsstellen eine Verbindung zwischen den virtuellen Teilnehmern M1', T1' und T2' und den gewünschten Konferenzteilnehmern M2, T1 und T2 schalten.

Der Aufbau der Konferenzschaltung kann sprachunterstützt geführt werden mit Meldungen wie z.B. "Hier ist der automatische Konferenzdienst. Ihre Teilnahme an einer Konferenz wird gewünscht. Sind Sie bereit?". Falls der gewünschte Teilnehmer akustisch seine Teilnahme an der Konferenz ablehnt oder dieser Teilnehmer nicht erreichbar ist (Teilnehmer-Anschluß belegt oder Teilnehmer meldet sich innerhalb einer bestimmten Zeitspanne nicht), so stellt dies der Dienste-Rechner fest und gibt eine akustische Meldung an den Mobilfunkteilnehmer M1, der die Konferenz einberuft. Alle erreichbaren Teilnehmer werden mittels der Schaltvorrichtungen C auf die Konferenzschiene aufgeschaltet. Die eigentliche Zusammenschaltung der Teilnehmerkanäle kann nach bekannten Verfahren erfolgen. Beispielsweise werden dazu die Signalpegel auf den Teilnehmerkanälen ausgewertet. Dem Teilnehmerkanal mit dem momentan höchsten Signalpegel (Sprecher) werden die anderen Teilnehmerkanäle (Zuhörer) aufgeschaltet. Durch fortlaufende Auswertung der Signalpegel, die hier in den Spracheingabe- und Sprachausgabemitteln (B) erfolgt, kann eine Unterbrechung einer Verbindung festgestellt werden. Danach kann ein erneuter Aufbau dieser Verbindung mittels der Teilnehmerführungs-Schaltungen (D) durchgeführt werden.

Die hier gezeigte rechnergesteuerte Konferenzdienst-Einrichtung ermöglicht es, in einfacher Art und Weise ein Mobilfunknetz mit Konferenzdiensten bereitzustellen. Die Konferenzdienst-Einrichtung SERV wird wie eine Vielzahl zusätzlicher Teilnehmer M1', M2', T1' und T2' an die Funkvermittlungsstelle GMSC angeschlossen, die nicht für eine Verbindung von Punkt-zu-Mehrpunkt-Verbindungen eingerichtet sein muß. Der Konferenzdienst-Einrichtung ist eine Mobilfunkteilnehmernummer TN 007 zugeordnet, so daß der Konferenzdienst mittels Wahl dieser Nummer von jedem Teilnehmer innerhalb des Mobilfunknetzes PLMN wie auch eines anderen an dieses Mobilfunknetz angeschlossenen Netzes PSTN einberufen werden kann, d.h. die Konferenzdienst-Einrichtung wird wie ein normaler Mobilfunkteilnehmer angewählt. Die Spracheingabe- und Sprachausgabemittel B ermöglichen eine sehr einfache Durchführung des Konferenzdienstes, insbesondere für die Mobilfunkteilnehmer. Auf eine umständliche Bedienung der Teilnehmerendgeräte zum Aufbau und zur Durchführung einer Konferenzschaltung (Tastatureingabe, etc.) kann verzichtet werden. Besonders vorteilhaft ist eine denkbare Ausführung der Spracheingabe- und Sprachausgabemittel B, die eine sprachgesteuerte Durchführung der Konferenz in verschiedenen Sprachen ermöglicht. Dazu sind die gezeigten Netze als ISDN-Netze ausgeführt, so daß anhand der Signalisierungen der an der Konferenz beteiligten Teilnehmernummern der Ländercode ausgewertet werden kann. Danach ist es möglich, festzustellen, in welchen Ländern sich die Teilnehmer einer Konferenz aufhalten. Denkbar ist auch die von den Teilnehmern gewünschte Sprache anhand von Sprachproben zu ermitteln.

Das gezeigte Mobilfunknetz PLMN ist für einen Konferenzdienst eingerichtet, der ausschließlich in der dafür bereitgestellten Konferenzdienst-Einrichtung SERV durchgeführt wird. Diese Struktur entspricht einem intelligenten Netz und ist daher sehr leicht erweiterbar und anpassungsfähig auf unterschiedliche Anforderungen. Beispielsweise ist die Konferenzdienst-Einrichtung in der Lage, mehrere Konferenzschaltungen unabhängig voneinander durchzuführen. Dazu sind entsprechend viele Schnittstellen-Schaltkreise A, Schaltvorrichtungen C und Teilnehmer-Führungsschaltungen D erforderlich.

Das gezeigte Mobilfunknetz ist als zellulares Mobilfunknetz nach GSM ausgeführt. Es sind jedoch zahlreiche weitere Ausführungen denkbar, insbesondere als DCS-1800-Mobilfunknetz oder als TETRA-Bündelfunknetz. Weiterhin sind Anwendungen in der drahtlosen Bürokommunikation denkbar wie beispielsweise der Anschluß der Konferenzdienst-Einrichtung an eine drahtlose Telekommunikationsanlage.

## Patentansprüche

1. Mobilfunknetz (PLMN) mit einer Funkvermittlungsstelle (GMSC), die Punkt-zu-Punkt-Verbindungen vermittelt zwischen Mobilfunk-Teilnehmern (M1, M2) innerhalb des Mobilfunknetzes (PLMN) oder zwischen den Mobilfunk-Teilnehmern und Teilnehmern (T1, T2) eines mit dem Mobilfunknetz verbundenen Telekommunikationsnetzes (PSTN),
**gekennzeichnet durch**
eine an die Funkvermittlungsstelle (GMSC) angeschlossene rechnergesteuerte Konferenzdienst-Einrichtung mit Schnittstellen-Schaltkreisen (A) zur Nachbildung von mindestens drei Teilnehmeranschlüssen (1, 2, 3, N), denen jeweils ein virtueller Teilnehmer (M1', M2', T1', T2') zugeordnet ist; mit steuerbaren Schaltvorrichtungen (C) zur Schaltung von Punkt-zu-Mehrpunkt-Verbindungen zwischen den virtuellen Teilnehmern und mit Rechner- und Steuermitteln (CPU, D) zur Steuerung von Verbindungsaufbau-Vorgängen, so daß die Funkvermittlungsstelle (GMSC) Punkt-zu-Punkt-Verbindungen zwischen jeweils einem der virtuellen Teilnehmer (M1', M2', T1', T2') und einem der Teilnehmer (M1, M2, T1, T2) vermittelt.

2. Mobilfunknetz (PLMN) nach Anspruch 1,
dadurch gekennzeichnet, daß der Konferenzdienst-Einrichtung (SERV) mindestens eine Mobilfunk-Teilnehmernummer (TN 007) zugeordnet ist, unter der einer der Teilnehmer (M1) eine Konferenzschaltung zwischen ihm und anderen der Teilnehmer (M2, T1, T2) anfordert.

3. Mobilfunknetz (PLMN) nach Anspruch 1,
dadurch gekennzeichnet, daß zur Durchführung sprachgesteuerter Konferenzschaltungen die Konferenzdienst-Einrichtung (SERV) Spracheingabe- und Sprachausgabemittel (B) enthält.

4. Rechnergesteuerte Konferenzdienst-Einrichtung (SERV) für ein Mobilfunknetz (PLMN) mit einer Funkvermittlungsstelle (GMSC), die Punkt-zu-Punkt-Verbindungen vermittelt zwischen Mobilfunk-Teilnehmern (M1, M2) innerhalb des Mobilfunknetzes (PLMN) oder zwischen den Mobilfunk-Teilnehmern und Teilnehmern (T1, T2) eines mit dem Mobilfunknetz verbundenen Telekommunikationsnetzes (PSTN),
**gekennzeichnet durch**
Schnittstellen-Schaltkreise (A), die zum Anschluß an die Funkvermittlungsstelle (GMSC) mindestens drei Teilnehmeranschlüsse (1, 2, 3, N) nachbilden, denen jeweils ein virtueller Teilnehmer (M1', M2', T1', T2') zugeordnet ist, Rechner- und Steuermittel (CPU, D), die über die Teilnehmeranschlüsse Verbindungsaufbau-Vorgänge so steuern, daß die Funkvermittlungsstelle (GMSC) Punkt-zu-Punkt-Verbindungen zwischen jeweils einem der virtuellen Teilnehmer (M1', M2', T1', T2') und einem der Teilnehmer (M1, M2, T1, T2) vermittelt, und steuerbare Schaltvorrichtungen (C), die für Konferenzschaltungen Punkt-zu-Mehrpunkt-Verbindungen zwischen den virtuellen Teilnehmern schalten.

5. Konferenzdienst-Einrichtung (SERV) nach Anspruch 4,
dadurch gekennzeichnet, daß die steuerbaren Schaltvorrichtungen (C) die Verbindungsaufbau-Vorgänge in Abhängigkeit von Anforderungen steuern, die zumindest einer (M1) der Teilnehmer mitteilt und, daß mindestens einem der nachgebildeten Teilnehmeranschlüsse (1) eine Mobilfunk-Teilnehmernummer (TN 007) zugeordnet ist, unter der dieser Teilnehmer (M1) eine Konferenzschaltung zwischen ihm und anderen der Teilnehmer (M2, T1, T2) anfordert.

6. Konferenzdienst-Einrichtung (SERV) nach Anspruch 4,
gekennzeichnet durch Spracheingabe- und Sprachausgabemittel (B), die für sprachgesteuerte Konferenzschaltungen fernmündliche Anforderungen der Teilnehmer (M1, M2, T1, T2) auswerten bzw. Sprachmitteilungen für diese Teilnehmer erzeugen.

7. Konferenzdienst-Einrichtung (SERV) nach Anspruch 6,
dadurch gekennzeichnet, daß die Spracheingabe- und Sprachausgabemittel (B) in mehreren Sprachen Anforderungen auswerten bzw. Sprachmitteilungen erzeugen.

8. Konferenzdienst-Einrichtung (SERV) nach dem Anspruch 6,
dadurch gekennzeichnet, daß die Rechner- und Steuermittel (CPU, D) mittels der Spracheingabe- und Sprachausgabemittel (B), Unterbrechungen einzelner Punkt-zu-Punkt-Verbindungen feststellen und daß die Rechner- und Steuermittel (CPU, D) anschließend den Wiederaufbau der jeweils unterbrochenen Verbindung steuern.

9. Konferenzdienst-Einrichtung (SERV) nach Anspruch 4,
dadurch gekennzeichnet, daß die Rechner- und Steuermittel (CPU, D) zum Abbau der Konferenz Verbindungsabbau-Vorgänge so steuern, daß die Funkvermittlungsstelle (GMSC) nacheinander die Punkt-zu-Punkt-Verbindungen zwischen den virtuellen Teilnehmern (M1', M2', T1', T2') und den Teilnehmern (M1, M2, T1, T2) auslöst.
